**Europäisches Patentamt**

**European Patent Office**

**Office européen des brevets**

(11) Numéro de publication: **0 241 347**
**B1**

(12) **FASCICULE DE BREVET EUROPEEN**

(45) Date de publication du fascicule du brevet:
04.10.89

(21) Numéro de dépôt: **87400675.2**

(22) Date de dépôt: **26.03.87**

(51) Int. Cl.⁴: **F16L 23/00**

(54) Dispositif de raccordement étanche de deux éléments de tuyauterie.

(30) Priorité: **08.04.86 FR 8605008**

(43) Date de publication de la demande:
**14.10.87 Bulletin 87/42**

(45) Mention de la délivrance du brevet:
**04.10.89 Bulletin 89/40**

(84) Etats contractants désignés:
**AT BE CH DE ES GB IT LI LU NL SE**

(56) Documents cités:
**DE-C- 1 253 950**
**US-A- 2 753 197**
**US-A- 2 898 000**
**US-A- 3 217 922**
**US-A- 3 918 725**
**US-A- 4 410 186**

(73) Titulaire: **SOCIETE INDUSTRIELLE D'EQUIPEMENT MECANIQUE, Société Anonyme dite:, 1, rue Villaret de Joyeuse, F-75017 Paris(FR)**

(72) Inventeur: **Servant, Antoine, 15, rue Cino del Duca, F-75017 Paris(FR)**

(74) Mandataire: **Caunet, Jean et al, Cabinet BEAU DE LOMENIE 55, rue d'Amsterdam, F-75008 Paris(FR)**

## Description

La présente invention concerne un dispositif de raccordement étanche de deux éléments de tuyauterie, comportant en saillie sur ceux-ci deux organes, tels que des brides, des raccords filetés ou autres, susceptibles d'être rapprochés l'un de l'autre par au moins un moyen de serrage, les faces contiguës de ces organes délimitant en regard des rainures concentriques à l'axe de ladite tuyauterie pour le logement d'un joint écrasable.

Des joints de ce type sont connus en particulier par les brevets US n° 2 898 000, n° 3 836 159 et n° 3 918 725.

Dans les brevets US n° 3 836 159 et n° 3 918 725, le joint est composite et constitué par au moins un anneau plastique, de préférence en polytétrafluoréthylène, interposé entre deux anneaux toriques en métal. L'anneau métallique extérieur est concave, tandis que l'anneau métallique intérieur est convexe. Ils sont disposés concentriquement l'un à l'autre, de façon à être au plus près par leurs crêtes annulaires et au plus loin par leurs bords marginaux, lesquels portent contre les flancs des rainures circulaires des brides. Ces anneaux métalliques constituent, lors du serrage, des conteneurs de l'anneau plastique en cours de déformation ; concomitamment, ils forment des ressorts maintenant l'anneau plastique sous charge élastique. L'étanchéité est donc assurée par compression de l'anneau plastique et par fluage de celui-ci.

Dans le brevet US n° 2 898 000, le joint est monolithique et métallique, de préférence en acier inoxydable. Il présente en saillie sur un anneau de section méplate quatre lobes s'étendant en croix. Ces lobes sont destinés à porter par leurs extrémités libres contre les flancs et les fonds des rainures circulaires des brides ; ils sont reliés à l'anneau par des parties amincies susceptibles de se déformer élastiquement. Lors du serrage, l'anneau central est soumis à une compression sans déformation, alors que les parties amincies des lobes fléchissent vers l'extérieur et que les bords marginaux desdits lobes s'écrasent en dépassant les limites élastiques de déformation.

Ces joints connus donnent généralement satisfaction du point de vue de l'étanchéité dans les applications particulières auxquelles ils sont destinés. Cependant, ils laissent apparaître des fuites dans les conditions limites d'utilisation : hautes pressions, vide poussé, températures élevées, très basses températures, vibrations, fluides corrosifs, etc. et ceci d'autant plus facilement que des variations de ces paramètres se produisent et engendrent des variations géométriques en forme et dimensions des organes de raccordement, ainsi que des variations de tensions internes et de contraintes aux interfaces. Par ailleurs, lors d'un démontage, voire d'un resserrage des boulons des brides, leur remplacement ne peut être évité. Un tel remplacement conduit à une dépense d'entretien relativement importante, compte tenu du coût élevé de ces joints et du grand nombre de brides à équiper dans les installations de traitement.

La présente invention a pour but de remédier à ces inconvénients. Elle vise également à faciliter le montage du joint, à réaliser un écrasement uniforme et fiable dans sa répartition, à réduire l'encombrement, à simplifier l'usinage des organes de raccordement et la fabrication du joint, à diminuer le prix de revient de la jonction. L'invention permet également, selon une variante, de détecter les fuites.

Pour atteindre ce but, la présente invention fait application d'un joint comprenant deux anneaux toriques déformables qui s'étendent symétriquement par rapport à un plan diamétral commun des tores et concentriquement l'un à l'autre, la convexité de l'anneau intérieur étant dirigée vers l'extérieur, tandis que la convexité de l'anneau extérieur est dirigée vers l'intérieur.

L'invention réside alors en ce que le joint est constitué uniquement par de tels anneaux, lesquels s'appuient l'un sur l'autre en regard des crêtes annulaires de leurs parties convexes, et en ce que la rainure circulaire de chaque organe de raccordement présente, au moins près de son fond, des portées de sertissage convergentes destinées à rapprocher l'un de l'autre les bords des anneaux précités et à les mater.

Pour information, la demande de brevet allemand 1 253 950 décrit un joint de culasse pour moteur à combustion interne. Ce joint présente deux bagues ayant en section la forme d'arcs de cercle, ces bagues étant opposées pour qu'elles portent l'une contre l'autre par leurs crêtes et qu'elles s'appuient par leurs arêtes intérieures et extérieures contre la culasse et le bloc moteur.

Dans cette réalisation connue, la pression de serrage est appliquée perpendiculairement aux plans parallèles des arêtes, alors que, dans la présente invention, elle est appliquée parallèlement.

De plus, dans cette réalisation connue, les bagues se déforment par aplatissement et, dès lors que rien ne s'y oppose, par accroissement du diamètre de leurs arêtes extérieures et diminution du diamètre de leurs arêtes intérieures. Par contre, dans la présente invention, les arêtes extérieures et intérieures des anneaux étant frettées par les rainures des brides, la déformation n'est pas libre et essentiellement différente.

Dans ces conditions, aucun enseignement applicable à la présente invention ne peut être tiré de cette demande de brevet allemand n° 1 253 950.

Dans l'invention, la ligne circulaire de crête qui s'étend dans un plan perpendiculaire à l'axe géométrique des éléments de tuyauterie et le long de laquelle les anneaux toriques sont en contact est une ligne d'appui de ces anneaux l'un sur l'autre. Elle ne se déplace pas lors du serrage des organes de raccordement ; chaque anneau, en prenant appui sur l'autre le long de cette ligne fixe et sur les parois convergentes des rainures qui lui correspondent en se rapprochant, tend à fléchir, en ce sens que ses génératrices arquées tendent à s'aplatir.

Dès lors, pendant le serrage des organes de raccordement, deux phénomènes apparaissent:

- d'une part, une force pressante intense s'établit entre les bords des anneaux toriques et les parois convergentes des rainures, force qui assure l'appui et la déformation plastique de ces bords, donc l'étanchéité de la jonction,

- d'autre part, une énergie très importante due à la déformation élastique des tores s'accumule de façon permanente dans les anneaux et plus spécialement dans leur zone centrale.

Cette énergie se trouve partiellement restituée pour compenser les variations géométriques du raccordement dues notamment aux variations de température (effet Salingré).

Il en résulte que l'étanchéité est assurée lors du serrage, même dans les conditions extrêmes d'utilisation, et que cette étanchéité subsiste lors de la variation des paramètres précités et des vibrations, sans qu'il y ait à modifier de ce fait le serrage.

Par ailleurs, les organes de raccordement peuvent être démontés et le joint réutilisé au remontage, sans risque de fuites.

Suivant des caractéristiques importantes de l'invention, l'épaisseur de chaque anneau torique d'un joint est constante le long de sa section en forme de secteur circulaire.

Un matériau moins dur que celui des anneaux toriques est interposé entre les bords de ceux-ci et les portées pressantes des rainures des organes de raccordement, ce matériau pouvant être métallique et de préférence à base d'argent.

Suivant une forme de réalisation particulièrement avantageuse, les crêtes annulaires des parties convexes des deux anneaux sont en contact direct l'une avec l'autre. Pour assurer le positionnement relatif des deux anneaux pendant leur déformation, des cuvettes et des bossages conjugués, de préférence sphériques, sont formés dans lesdits deux anneaux. Les portées de sertissage précitées sont des arrondis toriques reliant le fond de la rainure de chaque organe de raccordement considéré aux flancs latéraux de cette rainure. En outre, chaque organe de raccordement comporte une tubulure branchée sur un circuit de détection de fuite et débouchant dans l'espace délimité par les anneaux dans la rainure de cet organe.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :

- la figure 1 est une coupe axiale montrant une première forme de réalisation d'un dispositif de raccordement, conforme à l'invention, de deux éléments de tuyauterie,

- les figures 2 et 3 sont des coupes partielles illustrant, à plus grande échelle, la section du joint et de ses portées dèsignée par la flèche F sur la figure 1, respectivement lorsque ce joint est au repos et lorsqu'il est écrasé,

- la figure 4 est une perspective des deux anneaux du joint montés l'un dans l'autre,

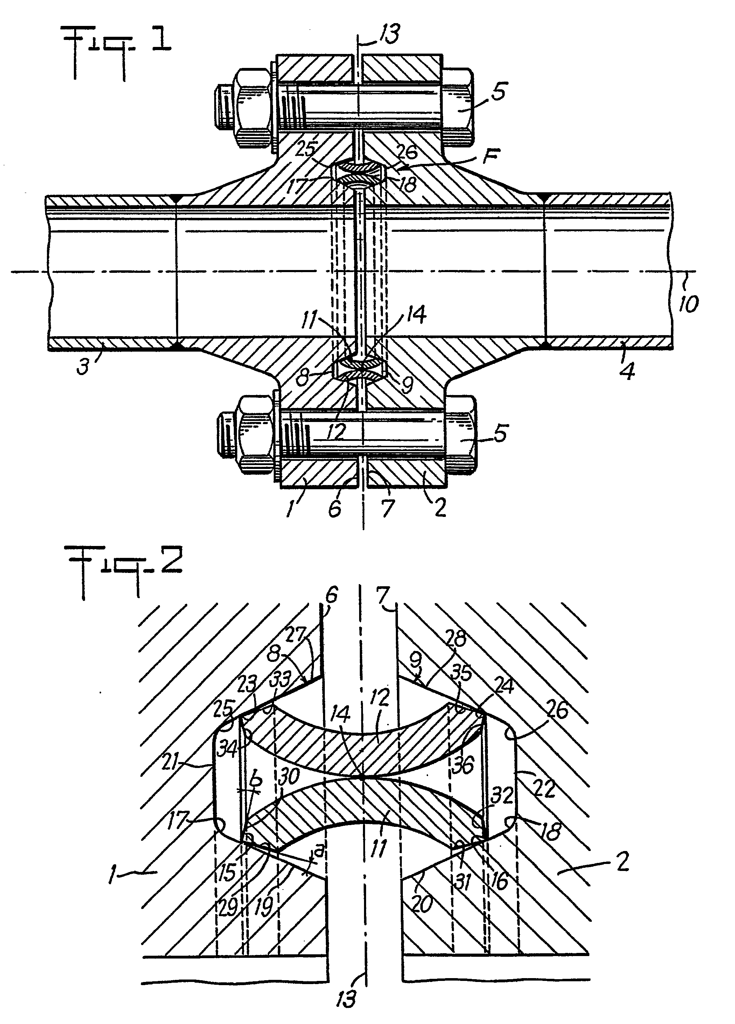

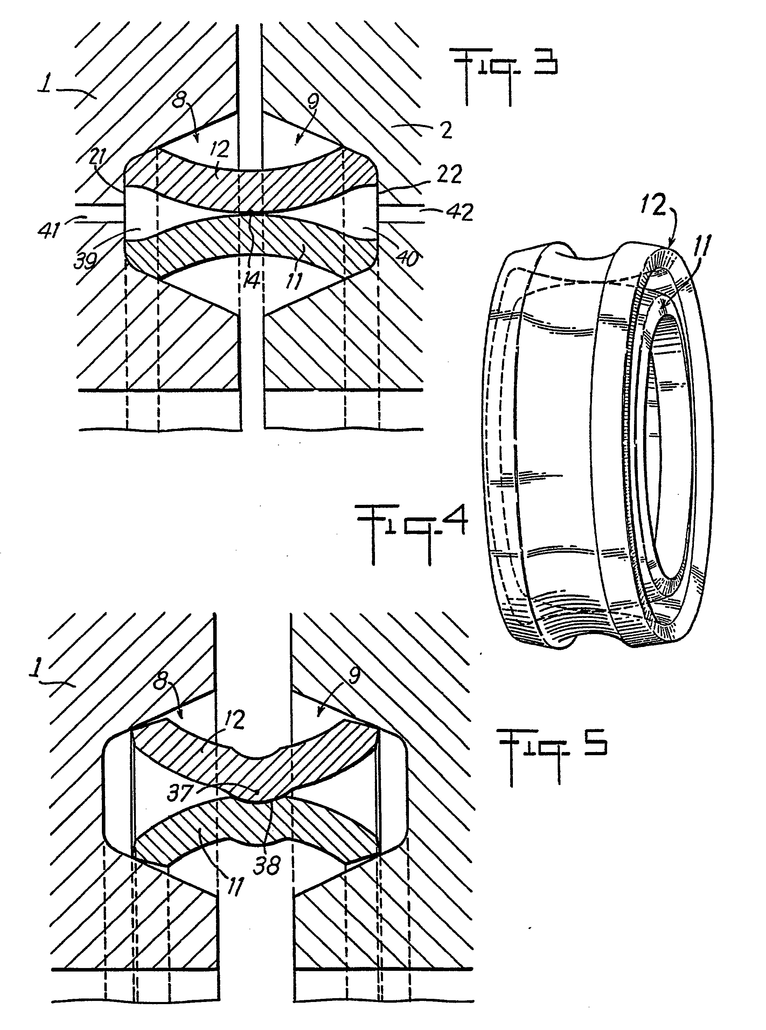

- la figure 2a est une vue analogue à la figure 2 illustrant une variante de réalisation,

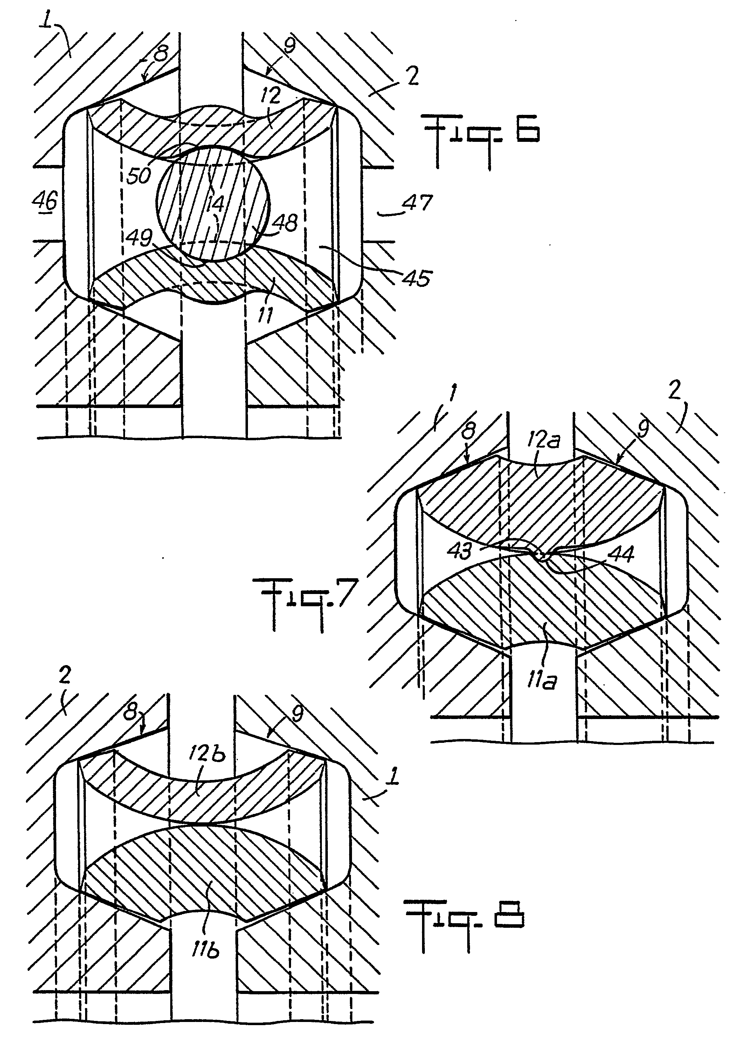

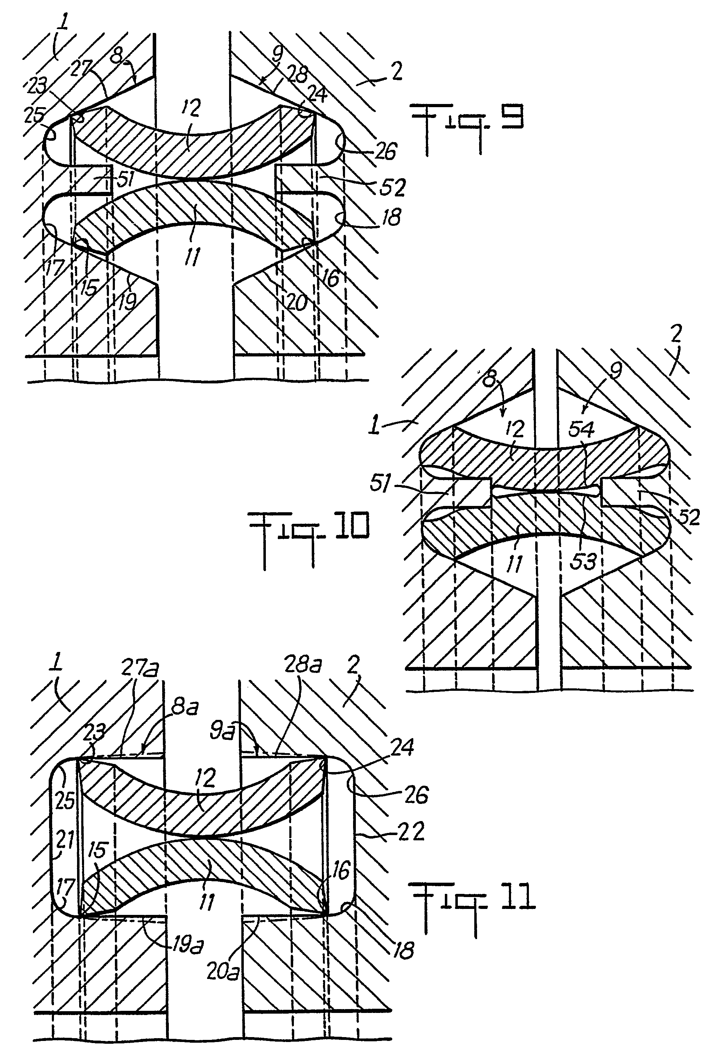

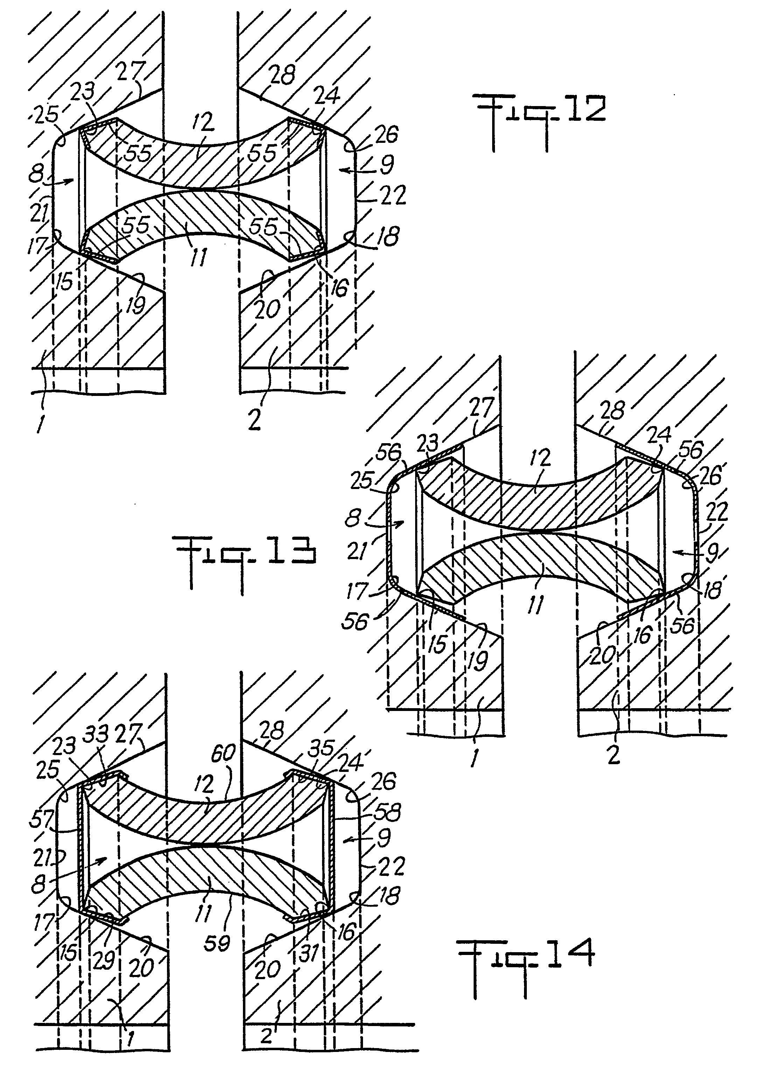

- les figures 5 à 8 sont des vues analogues à la figure 2, concernant d'autres variantes de réalisation du joint,

- les figures 9 et 10 sont des vues analogues aux figures 2 et 3 respectivement représentant une deuxième forme de réalisation,

- la figure 11 est une vue analogue à la figure 2 concernant une variante de réalisation des portées,

- les figures 12 à 14 sont des vues analogues à la figure 2 illustrant plusieurs modes d'exécution d'un perfectionnement,

- la figure 14a est une vue analogue à la figure 14 illustrant une variante de réalisation.

Ainsi que cela ressort de la figure 1, le dispositif de raccordement comporte deux brides 1, 2 destinées à être soudées en bout de deux éléments de tuyauterie 3, 4 et à être reliées par des boulons de serrage 5. Les faces contiguës 6, 7 des brides délimitent en regard des rainures 8, 9 concentriques à l'axe 10 des éléments 3, 4. Dans ces rainures, est logé un joint métallique constitué par deux anneaux 11, 12 formant pont entre les brides.

Suivant la première forme de réalisation illustrée par les figures 2 à 4, les anneaux 11 et 12 sont toriques ; ils s'étendent symétriquement par rapport à un plan diamétral commun 13 des tores qui est perpendiculaire à l'axe 10 précité ; les anneaux sont concentriques l'un à l'autre, la convexité de l'anneau intérieur 11 étant dirigée vers l'extérieur, tandis que la convexité de l'anneau extérieur 12 est dirigée vers l'intérieur ; ces anneaux sont en contact mutuel par leur directrice circulaire de crête 14 se trouvant dans le plan 13.

Dans cette forme de réalisation, les bords latéraux 15 et 16 de l'anneau intérieur 11 coopèrent avec des portées pressantes qui sont constituées essentiellement par des arrondis toriques 17 et 18 respectivement, reliant les flancs tronconiques 19 et 20 des rainures 8 et 9 des brides 1 et 2 aux fonds 21 et 22 de ces rainures. D'une manière analogue, les bords latéraux 23 et 24 de l'anneau extérieur 12 coopèrent avec des portées pressantes qui sont constituées essentiellement par des arrondis toriques 25 et 26 respectivement, reliant les flancs tronconiques 27 et 28 des rainures 8 et 9 des brides 1 et 2 aux fonds précités 21 et 22 de ces rainures. Les portées 19, 17 et 27, 25 de la rainure 8 convergent à l'opposé de la face 6 et, de même, les portées 20, 18 et 28, 26 de la rainure 9 convergent à l'opposé de la face 7 de sorte qu'en rapprochant les brides 1 et 2 l'une de l'autre au moyen des boulons 5 ces portées provoquent, comme cela ressort clairement de la figure 3, la déformation plastique des bords 15 et 23, respectivement 16 et 24, en même temps que leur rapprochement mutuel, ce qui a pour effet d'assurer l'étanchéité périphérique des anneaux 11 et 12, ainsi qu'une pression de contact permanente par déformation élastique des surfaces toriques en appui mutuel à leurs crêtes.

Dans cette première forme de réalisation (figure 2), les bords latéraux 15, 16 et 23, 24 des anneaux 11 et 12 portent contre les flancs 19, 20 et 27, 28 respectivement, des rainures 8 et 9 avant serrage des brides 1 et 2.

Suivant la variante de réalisation illustrée par la figure 2a, les bords latéraux précités 15, 16 et 23, 24 portent contre les arrondis toriques 17, 18 et 25, 26 respectivement, des rainures 8 et 9 avant serrage des brides 1 et 2.

Pour favoriser la déformation élastique précitée s'accompagnant de la déformation plastique périphérique, il peut être avantageux que :

- le bord circulaire 15 de l'anneau intérieur 11 soit défini par l'intersection d'une surface tronconique en dépouille frontale 29 faisant un angle "a" avec le flanc tronconique 19 de la rainure 8 et d'une surface latérale 30 qui, de préférence, est tronconique avec un angle de dépouille "b" avec le fond 21 de cette rainure 8 ;
- le bord circulaire 16 de l'anneau intérieur 11 soit défini par l'intersection d'une surface tronconique en dépouille latérale 32;
- le bord circulaire 23 de l'anneau extérieur 12 soit défini par l'intersection d'une surface tronconique en dépouille frontale 33 et d'une surface tronconique en dépouille latérale 34 ;
- la bord circulaire 24 de l'anneau extérieur 12 soit défini par l'intersection frontale 35 et d'une surface tronconique en dépouille latérale 36.

Les anneaux 11 et 12 peuvent être simplement en contact mutuel par leur directrice circulaire commune de crête 14 (figure 2) et ils doivent alors être montés flottants dans les rainures 8 et 9 pour qu'ils se centrent, lors du serrage des brides 1 et 2, par contact de leurs bords 15 et 23, 16 et 24 avec les flancs tronconiques 19 et 27, 20 et 28.

Afin de faciliter le montage du joint et d'éviter un éventuel coincement de travers lors du serrage, un moyen illustré par la figure 5 est mis en oeuvre pour positionner les anneaux 11 et 12 l'un par rapport à l'autre, sans entraver leur déformation. A cet effet, sont formés par billage des bossages sphériques 37 en saillie sur la surface torique intérieure de l'anneau extérieur 12 et des cuvettes sphériques 38 en creux sur la surface torique extérieure de l'anneau intérieur 11, les bossages coopérant avec les cuvettes et ces couples d'organes conjugués 37, 38 étant répartis de façon équiangle en nombre suffisant.

Lorsque le joint est positionné et déformé plastiquement, des chambres étanches 39, 40 (figure 3) sont ménagées entre les anneaux 11, 12 et les fonds 21, 22 des rainures 8, 9. Si une fuite se produit, le fluide véhiculé par les éléments de tuyauterie 3, 4 suinte et pénètre dans l'une, l'autre ou les deux chambres. Pour parer à cette fuite, il suffit de prévoir dans les brides 1 et 2 des conduits 41 et 42 débouchant dans lesdites chambres 39 et 40, ces conduits étant raccordès à un circuit de détection de fuite.

Bien entendu, l'épaisseur des anneaux toriques du joint peut être plus ou moins grande et adaptée aux conditions d'utilisation.

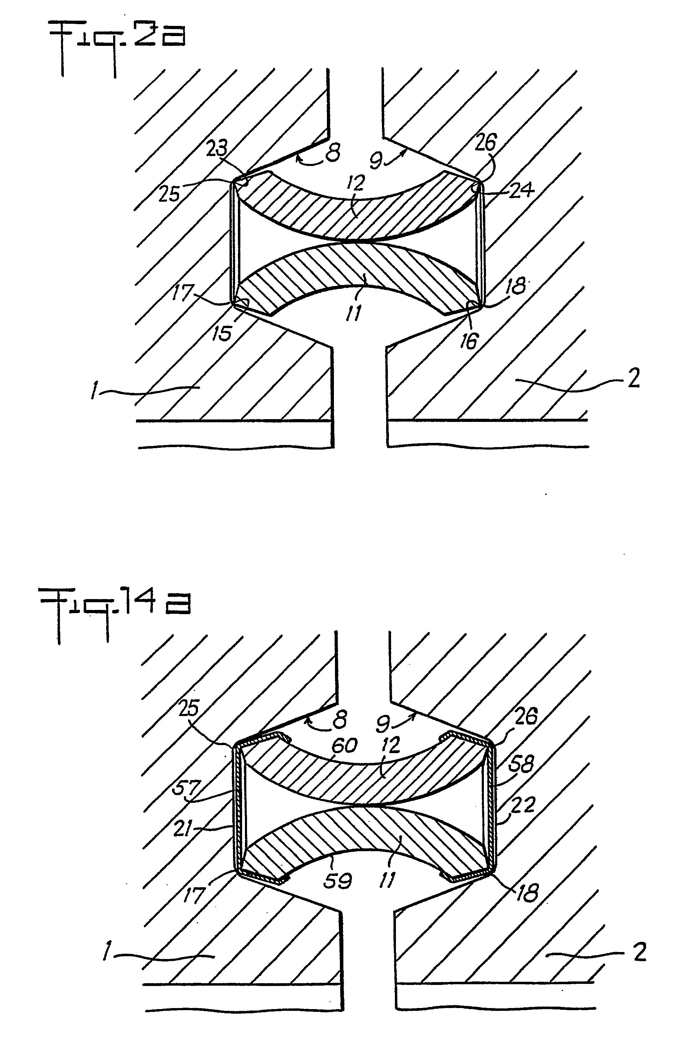

De toute façon, l'épaisseur de chaque anneau est constante le long de sa section en forme de secteur circulaire et, de préférence, son fibrage est orienté sensiblement de façon parallèle à l'axe géométrique 10 des éléments de tuyauterie 3, 4. Ainsi, les anneaux 11 et 12 peuvent être de même épaisseur, relativement faible (figure 2) ou bien les anneaux 11a et 12a peuvent être de même épaisseur relativement grande (figure 7) ou encore l'anneau intérieur 11b peut être de forte épaisseur et l'anneau extérieur 12b de faible épaisseur (figure 8), ou inversement, l'anneau de forte épaisseur étant situé du côté où règne la haute pression.

Pour effectuer le centrage dans le cas où les anneaux sont épais, il n'est pas possible de procéder par billage, mais les saillies 43 et les creux 44 peuvent être formés par repoussage du métal (figure 7) ou autre mode de déformation du métal.

Il peut être avantageux, ainsi que cela ressort de la figure 6, d'écarter les anneaux 11 et 12 pour ménager entre eux un passage tubulaire 45 dans lequel débouchent des conduits 46 et 47 ménagés dans les brides 1 et 2 ; ces conduits sont dérivés sur l'un des circuits à tubes concentriques que le dispositif permet de raccorder. Les anneaux 11 et 12 sont maintenus écartés par des billes 48, de préférence réparties de façon équiangle, ces billes étant interposées entre des cuvettes 49 et 50 formées en creux dans les crêtes annulaires 14 desdits anneaux. Le passage 45 est permanent entre les billes qui ne font que faiblement obstacle à l'écoulement du fluide provenant du cricuit dérivé.

La déformation plastique des bords 15, 16, 23, 24 des anneaux 11, 12 est réalisée principalement sur les arrondis toriques 17, 18, 25, 26. Dès lors et comme le montre la ligne 11, les rainures 8a, 9a peuvent présenter des flancs 19a et 27a, 20a et 28a parallèles entre eux (représentés en trait plein) ou faiblement inclinés (représentés en trait mixte), ce qui peut faciliter dans certains cas le montage du joint.

Suivant la deuxième forme de réalisation illustrée par les figures 9 et 10, le joint comporte toujours deux anneaux toriques 11 et 12 logés dans deux rainures 8 et 9 des brides. Mais dans cette réalisation, les arrondis 17 et 25 relient les flancs tronconiques 19 et 27 à une nervure annulaire médiane 51 faisant saillie dans la rainure 8 entre les anneaux ; d'une manière analogue, les arrondis 18 et 26 relient les flancs tronconiques 20 et 28 à une nervure annulaire médiane 52 faisant saillie dans la rainure 9 entre lesdits anneaux.

Comme le montre la figure 10, lors du serrage des brides 1 et 2, non seulement les bords 15, 16, 23 et 24 se déforment plastiquement dans les arrondis 17, 18, 25 et 26 précités, mais également les faces toriques en vis-à-vis 53 et 54 des anneaux se déforment plastiquement sur les nervures 51 et 52.

Quelle que soit la forme de réalisation choisie, il peut être avantageux d'interposer entre les bords 15, 23 et 16, 24 des anneaux toriques 11, 12 et les portées pressantes 17 à 20, 25 à 28 des rainures 8, 9 des brides 1, 2 un matériau moins dur que ces anneaux et par conséquent plus facilement déformable de façon plastique que ceux-ci. Ce matériau est généralement métallique et de préférence à base d'argent.

Suivant le mode d'exécution illustré par la figure 12, le revêtement 55 à base d'argent est déposé ou plaqué sur les bords des anneaux alors que les parois des rainures en sont exemptes.

Suivant le mode d'exécution illustré par la figure 13, le revêtement 56 à base d'argent est déposé ou plaqué dans les arrondis toriques des rainures et éventuellement sur les flancs et les fonds desdites rainures, alors que les bords des anneaux en sont exempts.

Bien entendu, des revêtements 55 et 56 peuvent exister en bordure des anneaux et dans les rainures.

Suivant le mode d'exécutionillustré par la figure 14, deux bandes coronales flottantes 57 et 58 à base d'argent enveloppent les deux anneaux toriques 11 et 12 en formant une capsule annulaire ; la bande 57 entoure les bords 15 et 23 en étant rabattue contre les surfaces tronconiques 29 et 33 des anneaux et contre la marge de leurs surfaces toriques 59 et 60 pour être logeable dans la rainure 8 de la bride 1 ; de même, la bande 58 entoure les bords 16 et 24 en étant rabattue contre les surfaces tronconiques 31 et 35 desdits anneaux et contre la marge de leurs surfaces toriques 59 et 60 pour être logeable dans la rainure 9 de la bride 2.

Dans le mode d'exécution selon la figure 14, les bords latéraux des bandes 57 et 58 portent contre les flancs 19, 27 et 20, 28 respectivement des rainures 8 et 9 avant serrage des brides 1 et 2, comme cela est le cas pour la forme de réalisation illustrée par la figure 2.

Dans le mode d'exécution selon la figure 14a, la variante selon la figure 2a est mise en oeuvre et consiste en ce que les bords latéraux des bandes 57 et 58 portent contre les arrondis toriques 17, 25 et 18, 26, respectivement, des rainures 8 et 9 avant serrage des brides 1 et 2.

Bien entendu, pour la bonne compréhension des dessins, les anneaux toriques ont été représentés avec des dimensions relativement grandes, mais cela ne peut pas exclure le cas général où lesdits anneaux sont relativement minces.

Le dispositif tel qu'il est décrit dans ce qui précède est applicable à tous types de raccordement du moment qu'une force de serrage est produite pour relier les organes fixés sur les éléments de tuyauterie. Ainsi, les brides 1 et 2 peuvent être remplacées par exemple par les parties taraudée et filetée d'un raccord vissé.

## Revendications

1. Dispositif de raccordement étanche de deux éléments de tuyauterie (3, 4) comportant, fixés en saillie sur ceux-ci deux organes (1, 2) susceptibles d'être rapprochés l'un de l'autre par au moins un moyen de serrage (5) et dont les faces contiguës (6, 7) délimitent en regard des rainures concentriques (8, 9) à l'axe (10) de ladite tuyauterie pour le logement d'un joint écrasable, de préférence métallique, le joint comprenant deux anneaux toriques (11, 12) déformables qui s'étendent symétriquement par rapport à un plan diamétral commun (13) des tores et concentriquement l'un à l'autre, la convexité de l'anneau intérieur (11) étant dirigée vers l'extérieur tandis que la convexité de l'anneau extérieur (12) est dirigée vers l'intérieur, le dispositif étant caractérisé:
- en ce que le joint est constitué <u>uniquement</u> par de tels anneaux, lesquels s'appuient l'un sur l'autre en regard des crêtes annulaires (14) de leurs parties convexes, et
- en ce que la rainure circulaire (8, 9) de chaque organe de raccordement (1, 2) présente, au moins près de son fond (21, 22), des portées pressantes (17 à 20, 25 à 28) convergentes destinées à rapprocher l'un de l'autre les bords (15, 23 et 16, 24) des anneaux précités et à les déformer plastiquement sur leur périphérie.

2. Dispositif selon la revendication 1, caractérisé en ce qu'un matériau (55 à 58) moins dur que celui des anneaux toriques (11, 12) est interposé entre les bords (15, 23 et 16, 24) de ceux-ci et les portées pressantes (17 à 20, 25 à 28) des rainures (8, 9) des organes de raccordement, ce matériau pouvant être métallique et de préférence à base d'argent.

3. Dispositif selon la revendication 2, caractérisé en ce que le matériau (55, 56) précité est déposé, plaqué ou autre sur les bords (15, 16, 23, 24) des anneaux toriques (11, 12) et/ou dans les rainures (8, 9) des organes de raccordement (1, 2).

4. Dispositif selon la revendication 2, caractérisé en ce que le matériau précité constitue deux bandes coronales flottantes (57, 58) entourant les bords (15, 23 ; 16, 24) des anneaux toriques (11, 12) contigus aux deux rainures (8, 9), respectivement.

5. Dispositif selon la revendication 1, caractérisé en ce que l'épaisseur de chaque anneau torique d'un joint est constante le long de sa section en forme de secteur circulaire.

6. Dispositif selon la revendication 5, caractérisé en ce que le fibrage de chaque anneau torique d'un joint est orienté sensiblement de façon parallèle à l'axe des éléments de tuyauterie.

7. Dispositif selon la revendication 1, caractérisé en ce que les crêtes annulaires (14) des parties convexes des deux anneaux (11, 12) sont en contact direct l'une avec l'autre.

8. Dispositif selon la revendication 7, caractérisé en ce que, pour assurer le positionnement relatif des deux anneaux pendant leur déformation, des cuvettes (38, 44) et des bossages (37, 43) conjugués, de préférence sphériques, sont formés dans lesdits deux anneaux (11, 12).

9. Dispositif selon la revendication 1, caractérisé en ce que plusieurs billes (48), de préférence réparties de façon équiangle, sont interposées entre des cuvettes (49, 50) formées en creux dans les crêtes annulaires (14) des parties convexes des deux anneaux (11, 12) pour que ceux-ci s'appuient l'un sur l'autre par leur intermédiaire.

10. Dispositif selon la revendication 7 ou 8, caractérisé en ce que chaque organe de raccordement (1, 2) comporte une tubulure (41, 42) branchée sur un circuit de détection de fuite et débouchant dans l'espace (39, 40) délimité par les anneaux (11, 12) dans la rainure (8, 9) de cet organe.

11. Dispositif selon la revendication 9, applicable aux circuits à tubes concentriques et caractérisé en ce que les organes de raccordement (1, 2) comportent des conduits internes (46, 47) dérivés sur l'un des circuits et débouchant dans le passage (45) délimité par les anneaux (11, 12) entre les billes (48) dans les rainures en regard (8, 9) de ces organes.

12. Dispositif selon la revendication 1, caractérisé en ce que les portées de sertissage précitées sont des arrondis toriques (17, 18, 25, 26) reliant le fond (21, 22) de la rainure (8, 9) de chaque organe de raccordement considéré (1, 2) aux flancs latéraux (19, 20, 27, 28 ; 19a, 20a, 27a, 28a) de cette rainure.

13. Dispositif selon la revendication 12, caractérisé en ce que les portées de sertissage précitées comportent, outre les arrondis toriques (17, 18, 25, 26), les flancs latéraux (19, 20, 27, 28) de la rainure considérée qui sont tronconiques et divergent jusqu'à la face (6, 7) de l'organe de raccordement (1, 2) sur laquelle cette rainure débouche.

14. Dispositif selon la revendication 12 ou 13, caractérisé en ce que les portées de sertissage précitées comportent, outre les arrondis toriques (17, 18, 25, 26), une nervure annulaire (51, 52) faisant saillie sur le fond de la rainure considérée pour pénétrer, en fin de course de serrage, dans les anneaux intérieur (11) et extérieur (12).

15. Dispositif selon la revendication 13, caractérisé en ce que les anneaux (11, 12) sont délimités par des surfaces tronconiques en dépouille frontale (29, 31, 33, 35) dont la pente par rapport à l'axe des éléments de tuyauterie et de leurs organes de raccordement est plus faible que celle des flancs tronconiques (19, 20, 27, 28) des rainures (8, 9) de ces organes.

16. Dispositif selon la revendication 12 ou 13, caractérisé en ce que les anneaux (11, 12) sont délimités par des surfaces tronconiques en dépouille latérale (30, 32, 34, 36) qui, lorsque ces anneaux sont logés dans les rainures (8, 9) des organes de raccordement (1, 2) à l'état non serré, convergent vers les bords (15, 16, 23, 24) de ces anneaux avec le fond (21, 22) des rainures de ces organes.

**Patentansprüche**

1. Vorrichtung zur Herstellung einer dichten Verbindung von zwei Rohrleitungselementen (3, 4), umfassend, vorspringend auf denselben befestigt, zwei mit mindestens einem Klemmittel (5) einander annäherbare Organe (1, 2), deren aneinandergrenzende Flächen (6, 7) gegenüberliegend zur Achse (10) der Rohrleitung konzentrische Rillen (8, 9) zwecks Aufnahme einer vorzugsweise metallischen Quetschdichtung begrenzen, welche Dichtung zwei verformbare torische Ringe (11, 12) aufweist, die sich symmetrisch zu einer gemeinsamen diametralen Ebene (13) der Toren und konzentrisch zueinander erstrecken, wobei die Konvexität des inneren Ringes (11) nach außen gerichtet ist, während die Konvexität des äußeren Ringes (12) nach innen gerichtet ist, welche Vorrichtung dadurch gekennzeichnet ist, daß:
– die Dichtung ausschließlich aus derartigen Ringen besteht, welche sich an den gegenüberliegenden Ringextremitäten (14) ihrer konvexen Teile aneinander abstützen, und
– die kreisförmige Rille (8, 9) jedes Verbindungsorgans (1, 2) zumindest in der Nähe ihres Grundes (21, 22) konvergierende Anpreßflächen (17 bis 20, 25 bis 28) zum Annähern der Ränder (15, 23 und 16, 24) der genannten Ringe aneinander und plastischen Verformen derselben über ihren Umfang aufweist.

2. Vorrichtung nach Anspruch 1, dadurch gekennzeichnet, daß ein weniger hartes Material (55 bis 58) als jenes der torischen Ringe (11, 12) zwischen den Rändern (15, 23 und 16, 24) derselben und den Anpreßflächen (17 bis 20, 25 bis 28) der Rillen (8, 9) der Verbindungsorgane eingesetzt ist, welches Material ein Metall, vorzugsweise auf Silberbasis, sein kann.

3. Vorrichtung nach Anspruch 2, dadurch gekennzeichnet, daß das genannte Material (55, 56) auf den Rändern (15, 16, 23, 24) der torischen Ringe (11, 12) und/oder in den Rillen (8, 9) der Verbindungsorgane (1, 2) niedergeschlagen, plattiert od. dgl. ist.

4. Vorrichtung nach Anspruch 2, dadurch gekennzeichnet, daß das genannte Material zwei lose kranzförmige Bänder (57, 58) bildet, die die Ränder (15, 23; 16, 24) der torischen Ringe (11, 12) umgeben, welche an die beiden Rillen (8 bzw. 9) angrenzen.

5. Vorrichtung nach Anspruch 1, dadurch gekennzeichnet, daß die Dicke jedes torischen Ringes einer Dichtung entlang ihres kreissektorförmigen Querschnitts konstant ist.

6. Vorrichtung nach Anspruch 5, dadurch gekennzeichnet, daß der Faserverlauf jedes torischen Ringes einer Dichtung im wesentlichen parallel zur Achse der Rohrleitungselemente gerichtet ist.

7. Vorrichtung nach Anspruch 1, dadurch gekennzeichnet, daß die ringförmigen Extremitäten (14) der konvexen Teile der beiden Ringe (11, 12) in direktem Kontakt miteinander stehen.

8. Vorrichtung nach Anspruch 7, dadurch gekennzeichnet, daß zur Sicherung der relativen Positionierung der beiden Ringe während ihrer Verformung zusammenpassende, vorzugsweise sphärische Vertiefungen (38, 44) und Wülste (37, 43) in den Ringen (11, 12) ausgebildet sind.

9. Vorrichtung nach Anspruch 1, dadurch gekennzeichnet, daß mehrere Kugeln (48), die vorzugsweise gleichwinkelig verteilt sind, zwischen Vertiefungen (49, 50) eingesetzt sind, welche hohl in den ringförmigen Extremitäten (14) der konvexen Teile der beiden Ringe (11, 12) ausgebildet sind, damit sich letztere unter Zwischenschaltung der Kugeln aneinander abstützen.

10. Vorrichtung nach Anspruch 7 oder 8, dadurch gekennzeichnet, daß jedes Verbindungsorgan (1, 2) einen Ansatz (41, 42) aufweist, der von einem Leckage-Detektionskreislauf abzweigt und in den von den Ringen (11, 12) in der Rille (8, 9) dieses Organs begrenzten Raum (39, 40) mündet.

11. Vorrichtung nach Anspruch 9 zur Anwendung bei Kreisläufen mit konzentrischen Rohren und dadurch gekennzeichnet, daß die Verbindungsorgane (1, 2) Innenleitungen (46, 47) aufweisen, die von einem der Kreisläufe abzweigen und in den von den Ringen (11, 12) zwischen den Kugeln (48) in den einander gegenüberliegenden Rillen (8, 9) dieser Organe begrenzten Durchlaß (45) münden.

12. Vorrichtung nach Anspruch 1, dadurch gekennzeichnet, daß die genannten Quetschverbindungsflächen torische Abrundungen (17, 18, 25, 26) sind, die den Grund (21, 22) der Rille (8, 9) jedes betreffenden Verbindungsorgans (1, 2) mit den seitlichen Flanken (19, 20, 27, 28; 19a, 20a, 27a, 28a) dieser Rille verbinden.

13. Vorrichtung nach Anspruch 12, dadurch gekennzeichnet, daß die genannten Quetschverbindungsflächen neben den torischen Abrundungen (17, 18, 25, 26) die seitlichen Flanken (19, 20, 27, 28) der betreffenden Rille umfassen, die kegelstumpfförmig sind und bis zur Fläche (6, 7) des Verbindungsorgans (1, 2), an welcher diese Rille mündet, divergieren.

14. Vorrichtung nach Anspruch 12 oder 13, dadurch gekennzeichnet, daß die genannten Quetschverbindungsflächen neben den torischen Abrundungen (17, 18, 25, 26) eine ringförmige Rippe (51, 52) umfassen, die auf dem Grund der betreffenden Rille vorsteht, um am Ende der Einpreßstrecke in den Innen- (11) und Außenring (12) zu dringen.

15. Vorrichtung nach Anspruch 13, dadurch gekennzeichnet, daß die Ringe (11, 12) von kegelstumpfförmigen Flächen (29, 31, 33, 35) mit einem vorderen Freiwinkel begrenzt sind, wobei die Steigung in bezug auf die Achse der Rohrleitungselemente und ihrer Verbindungsorgane geringer ist als jene der kegelstumpfförmigen Flanken (19, 20, 27, 28) der Rillen (8, 9) dieser Organe.

16. Vorrichtung nach Anspruch 12 oder 13, dadurch gekennzeichnet, daß die Ringe (11, 12) von kegelstumpfförmigen Flächen (30, 32, 34, 36) mit einem Seitenfreiwinkel begrenzt sind, welche bei Ruhen der Ringe in den Rillen (8, 9) der Verbindungsorgane (1, 2) im nicht geklemmten Zustand in Richtung zu den Rändern (15, 16, 23, 24) dieser Ringe mit dem Grund (21, 22) der Rillen dieser Organe konvergieren.

## Claims

1. Device for the sealed connection of two pipe elements (3, 4) comprising, fixed in projecting manner thereon, two members (1, 2) capable of being brought closer to each other by at least one clamping means (5) and of which the contiguous faces (6, 7) define opposite grooves (8, 9) concentric to the axis (10) of said pipe for housing a crushable seal, preferably made of metal, the seal comprising two deformable toric rings (11, 12) which extend symmetrically with respect to a common diametral plane (13) of the tores and concentrically to each other, the convexity of the inner ring (11) being directed outwardly, whereas the convexity of the outer ring (12) is directed inwardly, the device being characterized:

– in that the seal is constituted <u>solely</u> by such rings, which abut on each other opposite the annular crests (14) of their convex parts, and

– in that the circular groove (8, 9) of each connecting member (1, 2) presents, at least near its bottom (21, 22), convergent pressing bearing surfaces (17 to 20, 25 to 28) adapted to bring the edges (15, 23 and 16, 24) of said rings towards each other and to deform them plastically on their periphery.

2. Device according to claim 1, characterized in that a material (55 to 58) less hard than that of the toric rings (11, 12) is interposed between the edges (15, 23 and 16, 24) thereof and the pressing bearing surfaces (17 to 20, 25 to 28) of the grooves (8, 9) of the connecting members, this material being able to be made of metal and preferably based on silver.

3. Device according to claim 2, characterized in that said material (55, 56) is deposited, coated or otherwise applied on the edges (15, 16, 23, 24) of the toric rings (11, 12) and/or in the grooves (8, 9) of the connecting members (1, 2).

4. Device according to claim 2, characterized in that said material constitutes two floating coronal bands (57, 58) surrounding the edges (15, 23; 16, 24) of the toric rings (11, 12) contiguous to the two grooves (8, 9), respectively.

5. Device according to claim 1, characterized in that the thickness of each toric ring of a seal is constant along its section in the form of a circular sector.

6. Device according to claim 5, characterized in that the fiber orientation of each toric ring of a seal is substantially parallel to the axis of the pipe elements.

7. Device according to claim 1, characterized in that the annular crests (14) of the convex parts of the two rings (11, 12) are in direct contact with each other.

8. Device according to claim 7, characterized in that, to ensure relative positioning of the two rings during their deformation, combined recesses (38, 44) and bosses (37, 43) which are preferably spherical, are formed in said two rings (11, 12).

9. Device according to claim 1, characterized in that a plurality of balls (48), preferably distributed in equiangular manner, are interposed between recesses (49, 50) formed in hollow in the annular crests (14) of the convex parts of the two rings (11, 12) for the latter to abut on each other by their intermediary.

10. Device according to claim 7 or 8, characterized in that each connecting member (1, 2) comprises a pipe (41, 42) connected to a leakage detection circuit and opening out in the space (39, 40) defined by the rings (11, 12) in the groove (8, 9) of this member.

11. Device according to claim 9, applicable to circuits with concentric tubes, and characterized in that the connecting members (1, 2) comprise internal conduits (46, 47) branched on one of the circuits and opening out in the passage (45) defined by the rings (11, 12) between the balls (48) in the opposite grooves (8, 9) of these members.

12. Device according to claim 1, characterized in that the said pressing bearing surfaces are toric roundings (17, 18, 25, 26) connecting the bottom (21, 22) of the groove (8, 9) of each connecting member in question (1, 2) to the lateral sides (19, 20, 27, 28; 19a, 20a, 27ai, 28a) of this groove.

13. Device according to claim 13, characterized in that the said pressing bearing surfaces comprise, in addition to the toric roundings (17, 18, 25, 26), the lateral sides (19, 20, 27, 28) of the groove in question which are truncated and diverge up to the face (6, 7) of the connecting member (1, 2) on which this groove opens out.

14. Device according to claim 12 or 13, characterized in that the said pressing bearing surfaces comprise, in addition to the toric roundings (17, 18, 25, 26), an annular rib (51, 52) projecting on the bottom of the groove in question to penetrate, at the end of clamping stroke, in the inner (11) and outer (12) rings.

15. Device according to claim 13, characterized in that the rings (11, 12) are defined by truncated surfaces in front relief (29, 31, 33, 35) of which the slope with respect to the axis of the pipe elements and their connecting members is less than that of the truncated sides (19, 20, 27, 28) of the grooves (8, 9) of these members.

16. Device according to claim 12 or 13, characterized in that the rings (11, 12) are defined by truncated surfaces in lateral relief (30, 32, 34, 36) which, when these rings are housed in the grooves (8, 9) of the connecting members (1, 2) in the non-clamped state, converge towards the edges (15, 16, 23, 24) of these rings with the bottom (21, 22) of the grooves of these members.

Fig. 1

Fig. 2

Fig. 3

Fig. 4

Fig. 5

Fig. 6

Fig. 7

Fig. 8

EP 0 241 347 B1

Fig. 9

Fig. 10

Fig. 11

Fig-12

Fig-13

Fig-14

**Fig.2a**

**Fig.14a**